# EUROPÄISCHE PATENTSCHRIFT

(11) **EP 2 679 455 B1**
(45) Veröffentlichungstag und Bekanntmachung des Hinweises auf die Patenterteilung: **30.08.2017**
(21) Anmeldenummer: 13181944.3
(22) Anmeldetag: 08.11.2011
(51) Int. Cl.: B60S 1/38

(54) **Wischblattvorrichtung**
Wiper blade device
Dispositif de raclette d'essuie-glace

(30) Priorität: 13.12.2010 DE 102010062899
(43) Veröffentlichungstag der Anmeldung: 01.01.2014
(62) Teilanmeldung aus: 11779427.1
(73) Patentinhaber: ROBERT BOSCH GMBH, 70442 Stuttgart (DE)
(72) Erfinder: Herinckx, Dirk, 3350 Linter (BE); Depondt, Helmut, 3010 Kessel-Lo (BE); Bex, Koen, 3890 Jeuk (BE)

(56) Entgegenhaltungen:
- EP-A1- 2 103 490
- FR-A1- 2 923 785
- FR-A1- 2 943 020

## Beschreibung

### Stand der Technik

Die Erfindung geht aus von einer Wischblattvorrichtung nach dem Oberbegriff des Patentanspruchs 1.

Es ist bereits eine Wischblattvorrichtung mit einer Wischleisteneinheit bekannt, die ein Windabweiserelement, eine Wischlippe, ein federelastisches Trägerelement und ein Wischleistenelement aufweist, das einen Längsführungskanal für das Trägerelement umfasst, wobei das Wischleistenelement in einem montierten Zustand einen Formschluss mit dem Windabweiserelement bildet und wobei das Trägerelement in einem montierten Zustand einen Formschluss mit dem Wischleistenelement bildet.

Insbesondere ist aus der Druckschrift FR 2 923 785 A1 ein Wischblatt mit einer Wischleiste, mit der eine Wischlippe und ein Windabweiser verbindbar sind und die einen Führungskanal zu einer Aufnahme einer Federschiene aufweist, bekannt. Das Wischblatt umfasst ferner einen Wischarmadapter zu einer Befestigung des Wischblatts an einem Wischarm eines Fahrzeugs.

Ferner ist in der Druckschrift EP 2 103 490 A1 ein Wischblatt offenbart, das einen Windabweiser, eine Wischlippe und eine Federschiene aufweist, wobei die Federschiene in einem montierten Zustand einen Formschluss mit der Wischleiste bildet und wobei die Wischleiste einen Längsführungskanal für die Federschiene umfasst. Die Wischleiste bildet in einem montierten Zustand zudem einen Formschluss mit dem Windabweiser.

In der Druckschrift FR 2 943 020 A1 wird ein Wischblatt mit einer Wischleiste, einer Wischlippe und mit einem Windabweiser gelehrt, wobei die Wischleiste formschlüssig mit der Wichlippe und mit dem Windabweiser verbindbar ausgebildet ist. Die Wischleiste weist zudem einen Längsführungskanal zur Aufnahme einer Federschiene auf.

### Offenbarung der Erfindung

Die Erfindung geht aus von einer Wischblattvorrichtung mit einer Wischleisteneinheit, die ein Windabweiserelement, eine Wischlippe, ein federelastisches Trägerelement und ein Wischleistenelement aufweist, das einen Längsführungskanal für das Trägerelement umfasst, wobei das Wischleistenelement in einem montierten Zustand einen Formschluss mit dem Windabweiserelement bildet und wobei das Trägerelement in einem montierten Zustand einen Formschluss mit dem Wischleistenelement bildet.

Es wird vorgeschlagen, dass das Trägerelement zumindest ein Rastmittel aufweist, das in einem montierten Zustand eine Rastverbindung mit einem Wischblattadapter bildet. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter "vorgesehen" soll insbesondere speziell ausgelegt und/oder ausgestattet verstanden werden. Unter einem "Wischblattadapter" soll in diesem Zusammenhang insbe
sondere ein Adapter verstanden werden, der dazu vorgesehen ist, einen Kopplungsbereich der Wischblattvorrichtung für eine Kopplung mit einem Wischarm bereitzustellen. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischlippe auf eine Fahrzeugscheibe zu nutzen. Bevorzugt weist das Windabweiserelement zumindest eine konkave Fläche auf. Unter einem "Wischleistenelement" soll dabei in diesem Zusammenhang insbesondere ein Element verstanden werden, das dazu vorgesehen ist, das Windabweiserelement, das Trägerelement und die Wischlippe formschlüssig zu verbinden. Unter einem "Längsführungskanal" soll in diesem Zusammenhang insbesondere ein Führungskanal verstanden werden, der sich in montiertem Zustand in einer Haupterstreckungsrichtung parallel zu einer Längsrichtung der Wischleisteneinheit erstreckt. Unter einer "Längsrichtung" soll in diesem Zusammenhang insbesondere eine Richtung verstanden werden, die sich im Wesentlichen parallel zu einer Längserstreckung des Trägerelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Trägerelement" soll in diesem Zusammenhang insbesondere ein federelastisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einem "Rastmittel" soll in diesem Zusammenhang insbesondere ein Mittel verstanden werden, das dazu vorgesehen ist, eine Rastverbindung mit einem federelastischen Bauteil herzustellen, das zur Montage ausgelenkt wird. Bevorzugt ist das Rastmittel als Rastausnehmung ausgebildet. Es kann insbesondere eine besonders einfache und schnelle Montage der Wischblattvorrichtung erreicht werden. Dadurch, dass die Wischleisteneinheit ein federelastisches Trägerelement aufweist, das in einem montierten Zustand einen Formschluss mit dem

Wischleistenelement bildet, kann das Trägerelement sicher in der Wischleisteneinheit gehalten werden.

Weist die Wischblattvorrichtung einen Wischblattadapter auf, der in einem montierten Zustand einen Formschluss mit der Wischleisteneinheit bildet, kann eine besonders einfache und sichere Kopplung mit einem weiteren Bauteil, wie einem Wischerarm hergestellt werden.

Ferner wird vorgeschlagen, dass der Wischblattadapter eine Längsführungseinheit aufweist, die dazu vorgesehen ist, das Trägerelement formschlüssig aufzunehmen, wodurch eine besonders sichere Aufnahme des Trägerelements erzielt werden kann. Unter einer "Längsführungseinheit" soll in diesem Zusammenhang insbesondere eine Einheit verstanden werden, die dazu vorgesehen ist, eine Führung eines Trägerelements in Längsrichtung bereitzustellen. Bevorzugt weist die Längsführungseinheit zumindest eine sich in Längsrichtung erstreckende Führungsnut auf, die dazu vorgesehen ist, einen Formschluss mit der Trägereinheit zu bilden.

Eine sichere Verbindung des Windabweiserelements mit dem Wischleistenelement kann erreicht werden, wenn das Windabweiserelement zumindest ein Abschlusselement aufweist, das in einem montierten Zustand einen Formschluss bildet, und eine Bewegung des Windabweiserelements relativ zum Wischleistenelement in eine Längsrichtung vermeidet. Unter einem "Abschlusselement" soll in diesem Zusammenhang insbesondere ein Element verstanden werden, das an einem freien Ende des Windabweiserelements angeordnet und dazu vorgesehen ist, in den Längsführungskanal einzugreifen.

Wird das Windabweiserelement mit dem Wischleistenelement formschlüssig verbunden und nach einem Aufsetzen des Wischblattadapters auf die Wischleisteneinheit ein Trägerelement in die Wischleisteneinheit und in eine Längsführungseinheit des Wischblattadapters eingeschoben und eine Bewegung des Wischblattadapters relativ zur Wischleisteneinheit vermieden, kann eine besonders schnelle Montage der Wischblattvorrichtung erfolgen und eine besonders stabil ausgeführte Wischblattvorrichtung erreicht werden.

Eine Montage der Wischblattvorrichtung kann weiter beschleunigt werden, wenn nachdem die Wischlippe und das Wischleistenelement formschlüssig verbunden sind, ein Trägerelement in das Wischleistenelement eingeschoben wird und einen Formschluss mit einem Wischblattadapter bildet.

Besonders stabil kann die Wischblattvorrichtung ausgeführt werden, wenn nach dem Einschieben des Trägerelements in das Wischleistenelement, der Längsführungskanal in zumindest einem Endbereich stoffschlüssig verschlossen ist. Unter einem "Endbereich" soll in diesem Zusammenhang insbesondere, von einem freien Ende des Längskanals ausgehend, innerhalb der ersten und/oder letzten 20%, bevorzugt innerhalb der ersten und/oder letzten 10% einer Längserstreckung des Längskanals verstanden werden.

Eine Montage der Wischblattvorrichtung kann weiter beschleunigt werden, nachdem das Windabweiserelement mit dem Wischleistenelement formschlüssig verbunden ist, zumindest ein Abschlusselement des Windabweiserelements in das Wischleistenelement eingeschoben wird und eine Bewegung des Windabweiserelements relativ zum Wischleistenelement in eine Längsrichtung vermeidet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischblattvorrichtung in einem montierten Zustand,
- Fig. 2: eine perspektivische Ansicht des Wischblattadapters einer Wischblattvorrichtung nach Figur 1,
- Fig. 3: eine perspektivische Ansicht eines Wischleistenelements einer Wischblattvorrichtung nach Figur 1,
- Fig. 4: eine perspektivische Ansicht eines Wischblattadapteraufnahmebereichs des Wischleistenelements nach Figur 3,
- Fig. 5: eine perspektivische Ansicht eines Endbereichs des Wischleistenelements nach Figur 3,
- Fig. 6: eine perspektivische Ansicht eines Trägerelements einer Wischleisteneinheit nach Figur 3,
- Fig. 7: eine Draufsicht auf einen Ausschnitt des Trägerelements nach Figur 6,
- Fig. 8: eine perspektivische Ansicht eines Windabweiserelements der Wischblattvorrichtung nach Figur 1,
- Fig. 9: eine perspektivische Ansicht der Wischblattvorrichtung nach Figur 1 in einem ersten Montageschritt,
- Fig. 10: eine perspektivische Ansicht der Wischblattvorrichtung nach Figur 1 in einem zweiten Montageschritt und
- Fig. 11: eine perspektivische Ansicht der Wischblattvorrichtung nach Figur 1 in einem dritten Montageschritt.

### Beschreibung des Ausführungsbeispiels

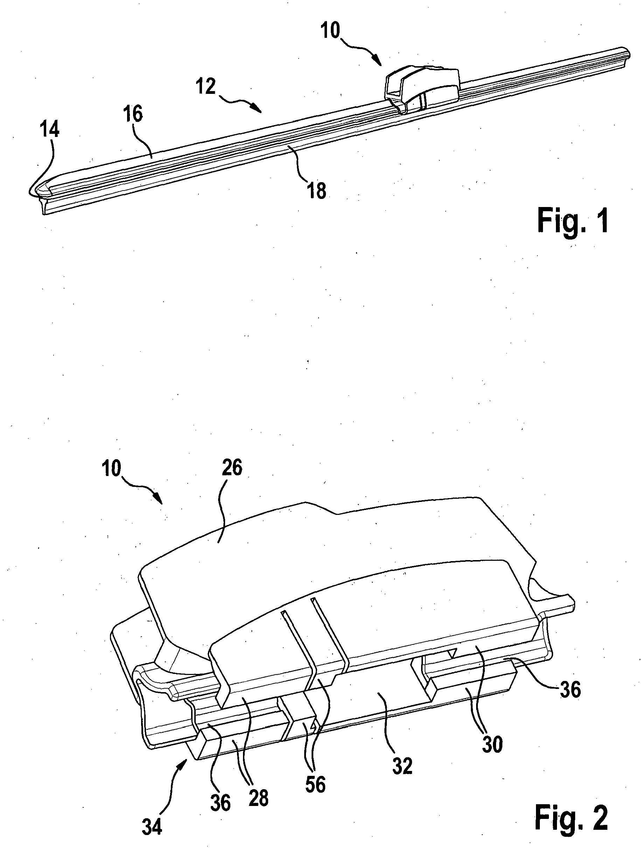

Figur 1 zeigt eine perspektivische Ansicht einer erfindungsgemäßen Wischblattvorrichtung mit einer Wischleisteneinheit 12, die ein Windabweiserelement 16, eine Wischlippe 18 und ein Wischleistenelement 14 aufweist. Das Windabweiserelement 16 ist mit dem Wischleistenelement 14 formschlüssig verbunden. Die Wischlippe 18 ist ebenfalls mit dem Wischleistenelement 14 formschlüssig verbunden.

An der Wischleisteneinheit 12 ist ein Wischblattadapter 10 befestigt. Der Wischblattadapter 10 weist einen Koppelbereich zu einer Kopplung mit einem Wischarm eines Kraftfahrzeugs (nicht dargestellt) auf.

Figur 2 zeigt eine perspektivische Ansicht des Wischblattadapters 10, der einen Grundkörper 26 aufweist, an dem zwei Befestigungsmittel 28, 30 angeformt sind. Die Befestigungsmittel 28, 30 grenzen an eine Zentralausnehmung 32 des Grundkörpers 26 an. Ferner sind am Grundkörper 26 zwei auslenkbare Rastha ken 56 angeordnet. Die Rasthaken 56 lassen sich quer zu einer Hauptlängserstreckung des Wischblattadapters 10, die in einem montierten Zustand parallel zu einer Längsrichtung 22 der Wischleisteneinheit 12 verläuft, auslenken. Die Längsrichtung 22 erstreckt sich parallel zu einer Längserstreckung der Wischleisteneinheit 12. Ferner grenzen vier Führungsnuten 36 an die Zentralausnehmung 32 an.

Der Wischblattadapter 10 beinhaltet eine Längsführungseinheit 34, die vier Führungsnuten 36 umfasst. Die Führungsnuten 36 sind zueinander hin geöffnet und erstrecken sich parallel zur Hauptlängserstreckung des Wischblattadapters 10.

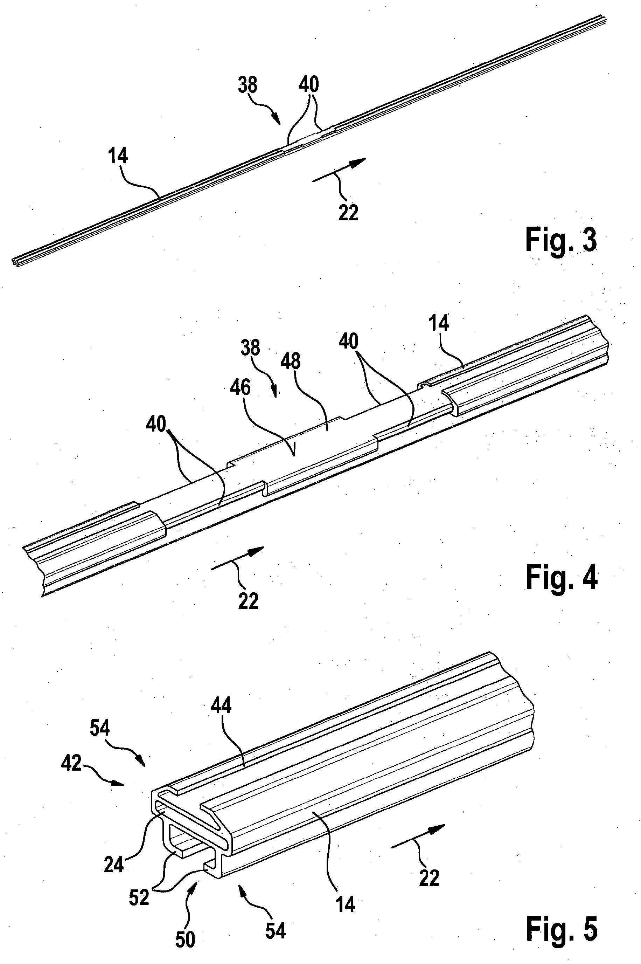

In Figur 3 ist das Wischleistenelement 14 dargestellt. Das Wischleistenelement 14 weist einen Wischblattadapteraufnahmebereich 38 auf, der sich in Längsrichtung 22 betrachtet von 45% bis 55% einer Längserstreckung des Wischleistenelements 14 erstreckt.

Wie näher in Figur 4 gezeigt, weist das Wischleistenelement 14 in seinem Wischblattadapteraufnahmebereich 38 vier Befestigungsausnehmungen 40 auf. Die Befestigungsausnehmungen 40 grenzen an eine Auflagefläche 46 an. Die Auflagefläche 46 befindet sich auf einem Auflagekörper 48, der zentral im Wischblattadapteraufnahmebereich 38 angeordnet ist.

Im Wischleistenelement 14 verläuft in Längsrichtung 22 ein Längsführungskanal 24 für die Aufnahme eines federelastischen Trägerelements 20, wie in Figur 5 in einem Endbereich 54 des Wischleistenelements 14 dargestellt. Der Längsführungskanal 24 weist einen gleichen Querschnitt auf, wie das Trägerelement 20. Bei einem Einschieben des Trägerelements 20 in den Längsführungskanal 24 bildet sich ein Formschluss. Im Wischblattadapteraufnahmebereich 38 ist der Längsführungskanal 24 innerhalb des Auflagekörpers 48 fortgesetzt.

Zur Befestigung des Windabweiserelements 16 ist an einer Seite des Wischleistenelements 14 eine Führungseinheit 42 angeordnet, die eine Profilschiene 44 aufweist. Die Profilschiene 44 erstreckt sich in ihrer Haupterstreckung parallel zur Längsrichtung 22.

Auf einer der Führungseinheit 42 gegenüberliegenden Seite ist eine Wischlippenführungseinheit 50 des Wischleistenelements 14 angeordnet, welches zwei L-förmige Führungsprofile 52 aufweist. Innerhalb der Wischlippenführungseinheit 50 ist in einem montierten Zustand ein Kopplungsbauteil der Wischlippe 18 angeordnet und bildet mit den Führungsprofilen 52 einen Formschluss.

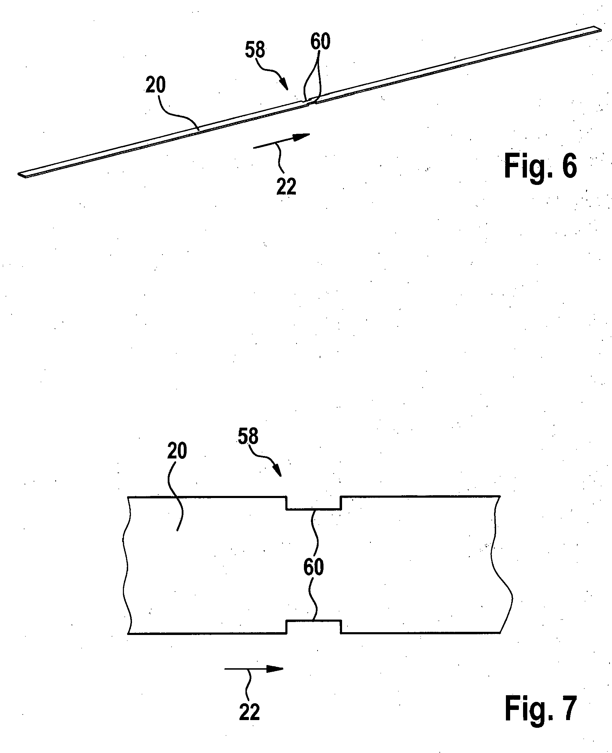

Figur 6 zeigt ein federelastisches Trägerelement 20 der Wischleisteneinheit 12. Das Trägerelement 20 besteht aus einem Federstahl und weist ein mittig angeordnetes Rastmittel 58 auf, das zwei Rastausnehmungen 60 umfasst. Die Rastausnehmungen 60 werden aus dem Federstahl ausgestanzt und weisen ein rechteckiges Profil auf, wie in Figur 7 in einer Draufsicht dargestellt. Die Rastausnehmungen 60 sind in Längsrichtung 22 betrachtet in gleicher Höhe angeordnet. Ferner weist das Trägerelement 20 eine Dicke auf, die einer Breite der Führungsnuten 36 entspricht.

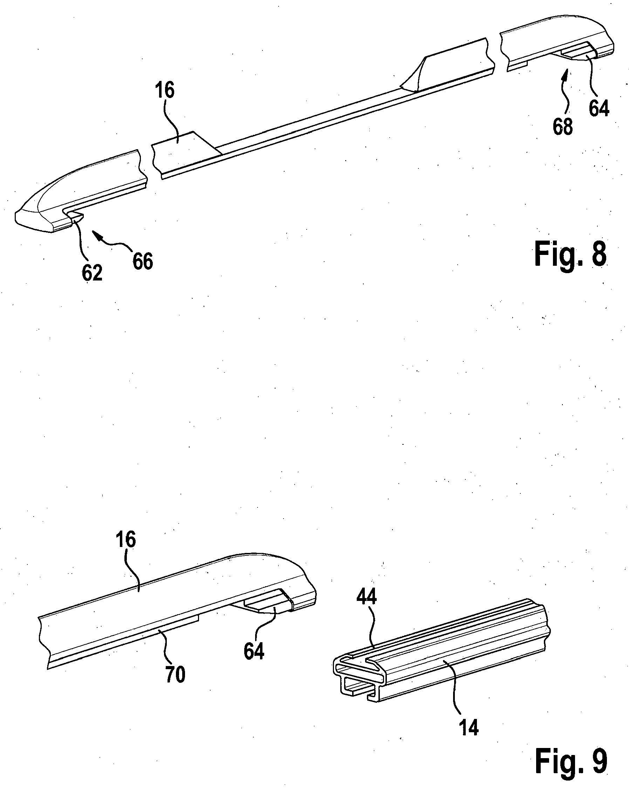

Das Windabweiserelement 16, wie in Figur 8 gezeigt, weist zwei Abschlusselemente 62, 64 auf, die in Endbereichen 66, 68 des Windabweiserelements 16 angeordnet sind. Die Endbereiche 66,68 befinden sich von einem freien Ende des Windabweiserelements 16 ausgehend, innerhalb der ersten und letzten 10% einer Längserstreckung des Windabweiserelements 16. Die Abschlusselemente 62, 64 weisen einen gleichen Querschnitt auf, wie der Längsführungskanal 24 des Wischleistenelements 14. In einem montierten Zustand greifen die Abschlusselemente in den Längsführungskanal 24.

In Figur 9 ist ein erster Montageschritt der Wischblattvorrichtung dargestellt. Das Windabweiserelement 16 wird in die Profilschiene 44 des Wischleistenelements 14 eingeschoben. Dabei greift die Profilschiene 44 einen Längsfortsatz 70 des Windabweiserelements 16. Dadurch wird das Windabweiserelement 16 formschlüssig mit dem Wischleistenelements 14 verbunden. Das Abschlusselement 62 wird abschließend in das Führungsprofil 52 eingeführt und vermeidet so eine Bewegung des Windabweiserelements 16 relativ zum Wischleistenelement 14 in Längsrichtung 22. Das andere Abschlusselement 64 bleibt zunächst außerhalb des Führungsprofils 52.

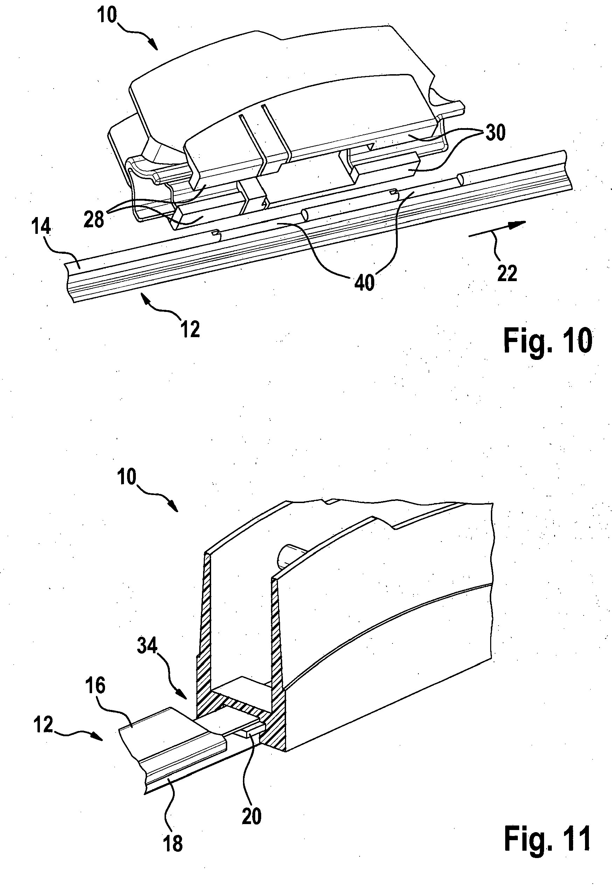

In einem zweiten Montageschritt, wie in Figur 10 gezeigt, wird der Wischblattadapter 10 auf das Wischleistenelement 14 gesetzt. Dabei greifen die Befesti gungsmittel 28, 30 des Wischblattadapters 10 formschlüssig in die Befestigungsausnehmungen 40 des Wischleistenelements 14 ein. Der Wischblattadapter 10 liegt in einem montierten Zustand auf der Auflagefläche 46 auf. Der Wischblattadapter 10 bildet mit der Wischleisteneinheit 12 in einen Formschluss. Eine Bewegung des Wischleistenelements 14 relativ zum Wischblattadapter 10 ist in Längsrichtung 22 vermieden.

In einem dritten Montageschritt wird die Wischlippe 18 in die Wischlippenführungseinheit 50 eingeschoben und bildet mit diesem einen Formschluss. Dadurch bildet das Wischleistenelement 14 in einem montierten Zustand einen Formschluss mit der Wischlippe 18. Ferner wird das Trägerelement 20 in den Längsführungskanal 24 des Wischleistenelements 14 eingeführt. Dadurch bildet das Trägerelement 20 in einem montierten Zustand einen Formschluss mit dem Wischleistenelement 14. Im Wischblattadapteraufnahmebereich 38 tritt das Trägerelement 20 aus dem Längsführungskanal 24 und wird anschließend in der Längsführungseinheit 34 des Wischblattadapters 10 geführt.

Figur 11 zeigt das Trägerelement 20, das komplett durch die Längsführungseinheit 34 geschoben ist. Das Trägerelement 20 bildet einen Formschluss mit dem Wischblattadapter 10. Der Wischblattadapter 10 kann somit nicht mehr von der Wischleisteneinheit 12 gelöst werden, sondern ist fest mit diesem verbunden.

Das Trägerelement 20 wird in einem vierten Montageschritt weiter geschoben, bis es sich vollständig in der Wischleisteneinheit 12 befindet. Um eine Bewegung des Trägerelements 20 relativ zur Wischleisteneinheit 12 zu vermeiden, wird das andere Abschlusselement 64 des Windabweiserelements 16 in den Längsführungskanal 24 des Wischleistenelements 14 eingeschoben. Dadurch sind der Längsführungskanal 24 und die Wischlippenführungseinheit 50 in ihren zwei Endbereichen 54 verschlossen. Eine Bewegung des Trägerelements 20 innerhalb des Längsführungskanals 24 ist in jeglicher Richtung vermieden.

Das Trägerelement 20 wird ferner durch die Rasthaken 56 des Wischblattadapters 10 gesichert, die in die Rastausnehmungen 60 des Trägerelements 20 eingreifen und eine Rastverbindung eingehen.

Die Rasthaken 56 werden dabei zunächst aus einer Ausgangslage quer zur Längsrichtung 22 ausgelenkt und bewegen sich dann elastisch zurück in die Ausgangslage. Dadurch wird ein Formschluss mit den Rastausnehmungen 60 gebildet und eine Bewegung des Trägerelements 20 relativ zum Wischblattadapter 10 in Längsrichtung 22 vermieden.

## Patentansprüche

1. Wischblattvorrichtung mit einer Wischleisteneinheit (12), die ein Windabweiserelement (16), eine Wischlippe (18), ein federelastisches Trägerelement (20) und ein Wischleistenelement (14) aufweist, das einen Längsführungskanal (24) für das Trägerelement (20) umfasst, wobei das Wischleistenelement (14) in einem montierten Zustand einen Formschluss mit dem Windabweiserelement (16) bildet und wobei das Trägerelement (20) in einem montierten Zustand einen Formschluss mit dem Wischleistenelement (14) bildet, **dadurch gekennzeichnet, dass** das Trägerelement (20) zumindest ein Rastmittel (58) aufweist, das in einem montierten Zustand eine Rastverbindung mit einem Wischblattadapter (10) bildet.

2. Wischblattvorrichtung nach Anspruch 1, **gekennzeichnet durch** einen Wischblattadapter (10), der in einem montierten Zustand einen Formschluss mit der Wischleisteneinheit (12) bildet.

3. Wischblattvorrichtung nach Anspruch 2, **dadurch gekennzeichnet, dass** der Wischblattadapter (10) eine Längsführungseinheit (34) aufweist, die dazu vorgesehen ist, das Trägerelement (20) formschlüssig aufzunehmen.

4. Wischblattvorrichtung nach einem der vorhergehenden Ansprüche, **dadurch gekennzeichnet, dass** das Windabweiserelement (16) zumindest ein Abschlusselement (62, 64) aufweist, das in einem montierten Zustand einen Formschluss mit dem Wischleistenelement (14) bildet, und eine Bewegung des Windabweiserelements (16) relativ zum Wischleistenelement (14) in eine Längsrichtung (22) vermeidet.

5. Verfahren zur Montage einer Wischblattvorrichtung nach einem der Ansprüche 1 bis 4, wobei das Windabweiserelement (16) mit dem Wischleistenelement (14) formschlüssig verbunden wird, **dadurch gekennzeichnet, dass** nach einem Aufsetzen des Wischblattadapters (10) auf die Wischleisteneinheit (12), ein Trägerelement in die Wischleisteneinheit (12) und in eine Längsführungseinheit des Wischblattadapters (10) eingeschoben wird und eine Bewegung des Wischblattadapters (10) relativ zur Wischleisteneinheit (12) vermeidet.

6. Verfahren nach Anspruch 5, **dadurch gekennzeichnet, dass** nachdem das Windabweiserelement (16) mit dem Wischleistenelement (14) formschlüssig verbunden ist, zumindest ein Abschlusselement (62, 64) des Windabweiserelements (16) in das Wischleistenelement (14) eingeschoben wird und eine Bewegung des Windabweiserelements (16) relativ zum Wischleistenelement (14) in eine Längsrichtung vermeidet.

## Claims

1. Wiper blade device with a wiper strip unit (12) which comprises a wind deflector element (16), a wiper lip (18), a spring-elastic carrier element (20) and a wiper strip element (14) which comprises a longitudinal guide channel (24) for the carrier element (20), wherein the wiper strip element (14) creates a form fit with the wind deflector element (16) in a mounted state, and wherein the carrier element (20) creates a form fit with the wiper strip element (14) in a mounted state, **characterized in that** the carrier element (20) exhibits at least one latching means (58), which forms a latching connection to a wiper blade adapter (10) in a mounted state.

2. Wiper blade device according to Claim 1, **characterized by** a wiper blade adapter (10) which creates a form fit with the wiper strip unit (12) in a mounted state.

3. Wiper blade device according to Claim 2, **characterized in that** the wiper blade adapter (10) exhibits a longitudinal guide unit (34), which is provided to receive the carrier element (20) in a form-fitted manner.

4. Wiper blade device according to one of the preceding claims, **characterized in that** the wind deflector element (16) exhibits at least one terminating element (62, 64) which creates a form fit with the wiper strip element (14) in a mounted state, and prevents a movement of the wind deflector element (16) relative to the wiper strip element (14) in a longitudinal direction (22).

5. Method of assembling a wiper blade device according to one of Claims 1 to 4, wherein the wind deflector element (16) is connected to the wiper strip element (14) in a form-fitted manner, **characterized in that**, after the wiper blade adapter (10) has been mounted on the wiper strip unit (12), a carrier element is inserted into the wiper strip unit (12) and into a longitudinal guide unit of the wiper blade adapter (10) and prevents a movement of the wiper blade adapter (10) relative to the wiper strip unit (12).

6. Method according to Claim 5, **characterized in that,** after the wind deflector element (16) has been connected to the wiper strip element (14) in a form-fitted manner, at least one terminating element (62, 64) of the wind deflector element (16) is inserted into the wiper strip element (14) and prevents a movement of the wind deflector element (16) relative to the wiper strip element (14) in a longitudinal direction.

## Revendications

1. Dispositif de balai d'essuie-glace comprenant une unité de raclette de balai d'essuie-glace (12) qui présente un élément déflecteur de vent (16), une lèvre de balai d'essuie-glace (18), un élément de support élastique à ressort (20) et un élément de raclette de balai d'essuie-glace (14) qui comprend un canal de guidage longitudinal (24) pour l'élément de support (20), l'élément de raclette de balai d'essuie-glace (14) formant, dans un état monté, un engagement par correspondance de formes avec l'élément déflecteur de vent (16) et l'élément de support (20), dans un état monté, formant un engagement par correspondance de formes avec l'élément de raclette de balai d'essuie-glace (14), **caractérisé en ce que** l'élément de support (20) présente au moins un moyen d'encliquetage (58) qui, dans un état monté, forme une liaison par encliquetage avec un adaptateur de balai d'essuie-glace (10).

2. Dispositif de balai d'essuie-glace selon la revendication 1, **caractérisé par** un adaptateur de balai d'essuie-glace (10) qui, dans un état monté, forme un engagement par correspondance de formes avec l'unité de raclette de balai d'essuie-glace (12).

3. Dispositif de balai d'essuie-glace selon la revendication 2, **caractérisé en ce que** l'adaptateur de balai d'essuie-glace (10) présente une unité de guidage longitudinal (34) qui est prévue pour recevoir l'élément de support (20) par engagement par correspondance de formes.

4. Dispositif de balai d'essuie-glace selon l'une quelconque des revendications précédentes, **caractérisé en ce que** l'élément déflecteur de vent (16) présente au moins un élément de terminaison (62, 64) qui, dans un état monté, forme un engagement par correspondance de formes avec l'élément de raclette de balai d'essuie-glace (14) et évite un déplacement de l'élément déflecteur de vent (16) par rapport à l'élément de raclette de balai d'essuie-glace (14) dans une direction longitudinale (22).

5. Procédé de montage d'un dispositif de balai d'essuie-glace selon l'une quelconque des revendications 1 à 4, dans lequel l'élément déflecteur de vent (16) est raccordé par engagement par correspondance de formes à l'élément de raclette de balai d'essuie-glace (14), **caractérisé en ce qu'**après le positionnement de l'adaptateur de balai d'essuie-glace (10) sur l'unité de raclette de balai d'essuie-glace (12), un élément de support est enfoncé dans l'unité de raclette de balai d'essuie-glace (12) et dans une unité de guidage longitudinal de l'adaptateur de balai d'essuie-glace (10) et évite un déplacement de l'adaptateur de balai d'essuie-glace (10) par rapport à l'unité de raclette de balai d'essuie-glace (12).

6. Procédé selon la revendication 5, **caractérisé en ce qu'**après que l'élément déflecteur de vent (16) a été raccordé par engagement par correspondance de formes à l'élément de raclette de balai d'essuie-glace (14), au moins un élément de terminaison (62, 64) de l'élément déflecteur de vent (16) est inséré dans l'élément de raclette de balai d'essuie-glace (14) et un déplacement de l'élément déflecteur de vent (16) par rapport à l'élément de raclette de balai d'essuie-glace (14) dans une direction longitudinale est évité.
